# EUROPEAN PATENT SPECIFICATION

(11) **EP 2 353 928 B1**
(45) Date of publication and mention of the grant of the patent: **03.09.2014**
(21) Application number: 10151993.2
(22) Date of filing: 28.01.2010
(51) Int. Cl.: B60N 2/22, B60N 2/38, B60N 2/44, B60N 2/64

(54) **Seat and backrest for an industrial vehicle**
Sitz und Rückenlehne für ein Industriefahrzeug
siège et dossier pour pour véhicule industriel

(43) Date of publication of application: 10.08.2011
(73) Proprietor: Atlet AB, 43582 Mölnlycke (SE)
(72) Inventor: Anderberg, Henrik, 413 20, GÖTEBORG (SE); Petersson, Håkan, 412 75, GÖTEBORG (SE); Linder, Thomas, 417 17, GÖTEBORG (SE); Ekstedt, Mariella, 517 37, BOLLEBYGD (SE)
(74) Representative: Lind, Urban Arvid Oskar

(56) References cited:
- WO-A1-2006/022315
- DE-A1- 3 824 730
- DE-A1- 10 044 437
- DE-A1- 19 512 012

## Description

### Technical Field of the Invention

The present invention relates to a backrest for an industrial vehicle where a user is seated transversely to a driving direction.

### Background Art

When it comes to lifting and transporting materials, it may be convenient to utilize an industrial vehicle such as an industrial truck for assistance. For driving and control, the industrial vehicle is typically provided with an open or closed driver's cab comprising a number of control elements such as a steering wheel, various switches, levers and foot pedals, along with a driver's seat. During operation, it is often necessary to travel both backward and forward for long distances, in particular when transporting large loads which obstruct the driver's view. Accordingly, situations frequently occur in which the driver operates in various directions, and consequently needs to view in different directions, such as sideways and to the rear; sometimes for an extended period of time. Improper sitting posture, however, not only contributes to back pain but also has an impact on other physiological functions, including circulation, respiration, and other visceral functions. Accordingly, it is of importance to maintain a proper sitting position during vehicle travel through the provision of anatomically correct support of the user's back.

A commonly known solution to address the operator viewing in different directions is to provide a rotatable seat. Such a seat is typically used on large trucks which have relatively large cabs, where the driver's seat can be made to swivel around a vertical axis. On smaller trucks, however, such as e.g. forklift and warehouse trucks, the amount of free space available inside the driver's cab is frequently not sufficient to make possible a swiveling of the driver's seat and control elements. Rather, it is commonly known to use a fixed seat faced sideways. Accordingly, the driver may need to repeatedly turn his head in different directions. A fixed seat not optimized ergonomically may hence lead to ergonomically unfavorable working positions, and associated risks of fatigue and work related health problems or even damage to the spinal column caused by bad posture.

In order to meet the need for a seat for use in a limited available space, which provides ergonomically favorable working conditions even when the driver is for long times turned to either of the sides, GB 2 287 649 for instance suggests low backrests, only covering the lower part of the spine. It is recognized that freedom of movement is important to maintain circulation, and to increase comfort; here by enabling the user to twist his shoulders to either side. However, although the driver is allowed to move the upper torso with continuous support from the backrest, only part of the spine is supported, which may be considered uncomfortable as well as ergonomically unfavorable.

DE 38 24 730 discloses a backrest for an industrial vehicle having a very narrow upper portion. Even though this seemingly allows some movement of the user's upper scapulae, it, on the other hands, offers very limited support for the users back.

Additional attempts have been made to introduce ergonomically favorable seats, and US 6,969,114 for instance suggests a support device for use in supporting the entire length of a user's spine while in a seated position. The support device is connected as an external part to a backrest of a seat, for instance a car seat, and allows the user to rotate to either side in the seat in an ergonomically advantageous manner. However, although US 6,969,114 provides an ergonomically favorable solution increasing freedom to move the upper torso without losing the support from the backrest, the suggested support device is not adapted for use in a sideways facing working position of e.g. a forklift truck.

Accordingly, a need for an alternative solution which provides better support for the entire spine, and still allows easy and comfortable twisting of the upper torso, still remains.

### General disclosure of the Invention

It is therefore an object of the present invention to provide such a solution, in which the above related drawbacks are eliminated wholly or at least partly.

According to a first aspect of the invention, there is provided a backrest according to claim 1 for an industrial vehicle where a user is seated transversely to a driving direction for supporting the seated user's vertebral column.

Preferably, the shape and/or resilience of the upper side portions is/are adapted to allow freedom of movement of the user's scapulae around said upper center portion, whereby each scapula is moveable at a minimum 1 cm and at a maximum 7 cm away from said supporting surface of the center portion, in a direction away from the user, and preferably is moveable at a minimum 2 cm and at a maximum 4 cm. Preferably, the parts of the upper side portions allowing said moveability of the scapula are arranged at a distance from a centre longitudinal line of the backrest falling within the range 7.5-15 cm.

With a backrest in accordance with the present invention, support for the entire spine is hence provided, allowing easy and comfortable twisting of the upper torso. It has been found by the present inventors, that the above-discussed minimum and maximum movement provided for the scapulae in a rearward direction provides a very good and ergonomically favorable twisting possibility for the spine when the user faces different directions, and at the same time in all positions provides a good support over a relatively large part of the user's back.

Notably, the vertebral column is divided in regions, comprising from bottom to top a pelvic region, lumbar region, thoracic region and cervical region.

The introduced backrest is specifically advantageous for use in an industrial vehicle where a user is seated transversely to a driving direction, and is hence adapted for use in a sideways facing working position where the user frequently needs to view in various directions, such as sideways and to the rear. Notably, the term "industrial vehicle" is intended to be interpreted in a broad sense including vehicles such as industrial and/or warehouse trucks, e.g. forklift trucks, stacker trucks, pallet trucks, palletizers, lift trucks, side loaders, trailer loaders, or similar types of vehicles.

With an upper section for support of the user's thoracic region, which upper section comprises an upper center portion essentially flat in a supporting plane and having a width along a longitudinal direction, the upper center portion may hence lie substantially flush with the user's back proximate to the spine. The supporting plane it is to be understood to indicate a side of the backrest facing the user. The width of the upper center portion may for instance according to one exemplifying embodiment be essentially constant along the longitudinal direction, that is along a direction substantially coinciding with the user's spine, allowing the design to be simplified and hence cost effective. Alternatively, according to another embodiment, the width of the upper center portion may be essentially gradually tapered along the longitudinal direction in an upward direction of the backrest, whereby sufficient support of the user's spine may be supported with less material required. Notably, "essentially flat", "essentially constant" and "essentially gradually tapered" are intended to be interpreted in a broad sense, including as well "close to" flat, constant and/or gradually tapered. The width of the upper center portion is sufficiently narrower than a shoulder width of an average person. The upper center portion is accordingly adapted for providing balance between stability and moveability for the seated user, enabling for the user to twist his upper torso around the upper center portion. Furthermore, with the provision of a concave lower section, the user's lumbar and/or pelvic region is adequately supported, and offers the user comfort and stability while seated. The upper and lower sections may be separate parts, even arranged a short distance from each other. Typically, however, the upper and lower sections are integrated.

As the upper section furthermore comprises upper side portions provided at least partly along outer edges of the upper center portion in the longitudinal direction and at least partly extending beyond the outer edges in a lateral direction, i.e. in a direction substantially perpendicular to the longitudinal direction and essentially parallel to the user-s shoulder blades when sitting in an upright, forward facing position, the backrest of the present invention introduces additional advantageous features. With the upper side portions being adapted to allow freedom of movement of the user's scapulae around the upper center portion, the shoulders of the seated user are hence permitted to rotate substantially without obstruction in a sideward direction. The upper side portions do not necessarily provide support to the user's back when the user is facing straight forward, but are rather specifically adapted to provide support for the user's back when the user is turned to either side. The upper section with its upper center portion in combination with the upper side portions hence enables for moveability and stability for the seated user in combination with easy rotation from side to side, where support to the user's thoracic region is provided even when he or she is in a rotated position. The introduced backrest with its upper section along with its previously discussed lower section accordingly enables for support of the seated user's full back, yet allowing free movement of the shoulder blades and arms, and turning of the upper torso, in an ergonomically favorable manner.

The upper side portions have a shape that enables the above-discussed moveability of the scapulae, such as with outwardly inclined supporting planes, providing the upper part with a generally inwardly convex shape. Additionally, the moveability of the scapulae may be provided by making the supporting plane of the upper side portions sufficiently resilient. Accordingly, the desired moveability can generally be accomplished by means of the shape of the upper side portions or by a combination of using a material with sufficient resilience.

The upper side portions are implemented by having a supporting surface of the upper side portions being outwardly inclined from the supporting plane forming an angle therewith. Notably, "outwardly inclined supporting surface" is to be understood as meaning the supporting surface extending away from the seated user rather than towards the user, e.g. extending slightly backwards in a transversal direction from the supporting plane. The supporting surface may hence be adapted to specifically provide support to the user when he or she is turned to the corresponding side, while not necessarily being in contact with the user when he or she is facing straight forward, e.g. by means of the supporting surface being chamfered or beveled in a slightly backwards direction from the supporting plane. The upper side portions consequently provide open space to freely accommodate movement of the upper torso, arms and shoulder blades of the seated user. As an example, the upper side portions may for instance have a cross section along the longitudinal direction resembling a right angle triangle with one side arranged along one of the outer edges of the upper center portion, the extension of the side substantially coinciding with a thickness of the upper center portion in the transversal direction, and a second side of the triangle extending slightly inclined backwards from the supporting plane forming an angle therewith.

The angle at which the supporting surface meets the supporting plane may be selected and adapted for the implementation at hand. In order to optimize the inclination of the supporting surface, however, an average value of the angle is according to one embodiment in the range of 30 to 60 degrees, and preferably 40 to 50 degrees. Thereby, the inclination of the supporting surface lies within a range considered most appropriate for sideways support of the seated user. Notably, "an average value of" is of importance should the supporting surface - in a cross section in the longitudinal direction - not be represented by a straight line, but for instance be a line being convexly or concavely curved. Should that be the case, an average value may be utilized to define the angle, which average value is the angle between the supporting plane and a straight line imagined from where the supporting surface meets the supporting plane to an end of the supporting surface in the transversal direction.

The upper side portions may be separate from the upper center portion, even arranged a short distance there from, but may also be integrated therewith. Furthermore, the upper side portions may be of the same material as the upper center portion, or of any material considered appropriate.

According to one embodiment, the upper side portions are more resilient than the upper center portion, thereby allowing for differing characteristics of the two. Moreover, according to an alternative embodiment, the upper side portions comprise a deformable resilient material. Thereby, the freedom of movement of the user's scapulae around the upper center portion may also be accomplished by means of the deformability characteristic of the material, in addition to, by means of outwardly inclined supporting surfaces. Since the material is deformable, at least part of the upper side portions are adapted to give way as the user twists the upper part of his body placing pressure from e.g. the shoulder blade thereon. Accordingly, the upper side portions according to this embodiment provide deformable resilient material for enablement of movement of the upper torso, arms and shoulder blades of the seated user. Along with the upper center portion, the introduced upper side portions - as previously discussed being outwardly inclined and comprising deformable resilient material - consequently provide adequate support and a good ergonomic posture when the driver is facing forward as well as is turned to either side.

The proportions of the upper side portions may be selected to suit different implementations, and may for instance be adapted to suit an expected shoulder width of the user and/or expected pressure supplied to the upper side portions with twisting of the upper torso. According to one embodiment, however, the upper side portions at least partly extend 1 to 9 cm, and preferably 3 to 7 cm, beyond the outer edges in the lateral direction. Thereby, an extension considered most appropriate for accommodating an average person is provided.

Preferably, the lower section at least partly has a width along the longitudinal direction which is greater than the width of the upper center portion. The width of the upper center portion is further preferably in the range of 10 to 25 cm, and preferably 17 to 22 cm.

The backrest of the present invention is intended to provide substantial support to a wide range of persons of varied heights and body types. According to one embodiment, however, the upper center portion extends 5 to 35 cm, and preferably 15 to 25 cm, in the longitudinal direction. Thereby, the length of the upper center portion is within a range considered most appropriate for use in an industrial vehicle. For the same reason, according to another embodiment, the lower section extends 25 to 55 cm, and preferably 35 to 45 cm, in the longitudinal direction.

In order to increase the comfort for the user, the lower section at least partly has an inwardly concave surface for embracing the user's lumbar and/or pelvic region. Notably, "inwardly concave" is here to be understood as the lower section extending laterally on both sides of a centre of the lower section, accordingly curving toward the seated user on both sides. Thereby, the lower section is adapted to extend at least partly around the user's lumbar and/or pelvic region to assist with positioning the user in the backrest and providing stable support.

In order to increase the comfort for the user, the upper center portion and/or the lower section may also comprise a resilient padding. Thereby, the user may rest comfortably against the backrest while seated.

According to a yet another embodiment, the backrest further comprises a headrest for support of the user's cervical region, which headrest comprises a head center portion and head side portions. The head side portions are provided at least partly along outer edges of the head center portion in the longitudinal direction and are at least partly extending beyond the outer edges of the head center portion in a lateral direction. The head side portions are furthermore of similar structure as the upper side portions. With introduction of a headrest, in addition to offering support of the entire length of the user's spine, the backrest also provides support to the user's head, e.g. when tilting the seat backwards.

The head center portion and/or headrest may be separate from the upper center portion and/or upper section, even arranged a short distance there from, or may be integrated therewith. Furthermore, the head center portion may be of the same material as the upper center portion or of any material considered appropriate.

With the provision of head side portions being of similar structure as the upper side portions, the design and manufacturing of the backrest may be simplified and more cost effective compared to present solutions having similar functionality. Additionally, similar advantages as described in connection with the discussion of the upper side portions in the foregoing may be accomplished as well for the user's head. Accordingly, moveability of the head of the seated user is enabled without obstruction in a sideward direction. For instance, a head supporting surface of the head side portions being outwardly inclined may provide support to the user's head when he or she is turned to the corresponding side, while not necessarily being in contact with the user's head when he or she is facing straight forward. Similarly, for instance a head side portion comprising a deformable material may be adapted to give way as the user twists his head placing pressure thereon. Note, however, that the deformable resilient material of the head side portion may differ from the deformable material of the upper side portions, as well as that an angle between the supporting plane and an outwardly inclined head supporting surface may differ from an angle between the supporting plane and an outwardly inclined supporting surface of an upper side portion.

Additionally, according to further aspects of the invention, an industrial vehicle driver's seat is provided, comprising an essentially horizontal seat section for supporting a seated user's buttocks; and a backrest in accordance with the above. Moreover, an industrial vehicle, and preferably an industrial truck, is provided comprising such a driver's seat. With such an industrial vehicle driver's seat and/or industrial vehicle, similar effects as described in the foregoing with reference to the first aspect of the invention may be accomplished.

Other aspects, benefits and advantageous features of the invention will be apparent from the following description and claims.

### Brief Description of the Drawings

These and other aspects of the present invention will now be described in more detail, with reference to the appended drawings showing currently preferred embodiments of the invention, wherein:
Fig. 1 illustrates an overview of an exemplifying industrial vehicle in accordance with a first embodiment of the present invention;
Fig. 2a is a front view of the backrest of Fig. 1, showing the backrest in greater detail;
Fig. 2b is a three-dimensional view of the backrest of Fig. 2a;
Fig. 2c illustrates a cross section of the upper section of the backrest of Fig. 2a along line A-A;
Fig. 2d illustrates a cross section of the lower section of the backrest of Fig. 2a along line B-B;
Fig. 3 shows a cross section of an exemplifying upper section of a backrest according to a second embodiment not forming part of the present invention;
Fig. 4 illustrates a front view of an upper part of a backrest according to a third embodiment of the present invention, comprising a headrest; and
Fig. 5 illustrates in front view an exemplifying backrest according to a fourth embodiment of the present invention.

### Detailed Description of the Preferred Embodiments of the Invention

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

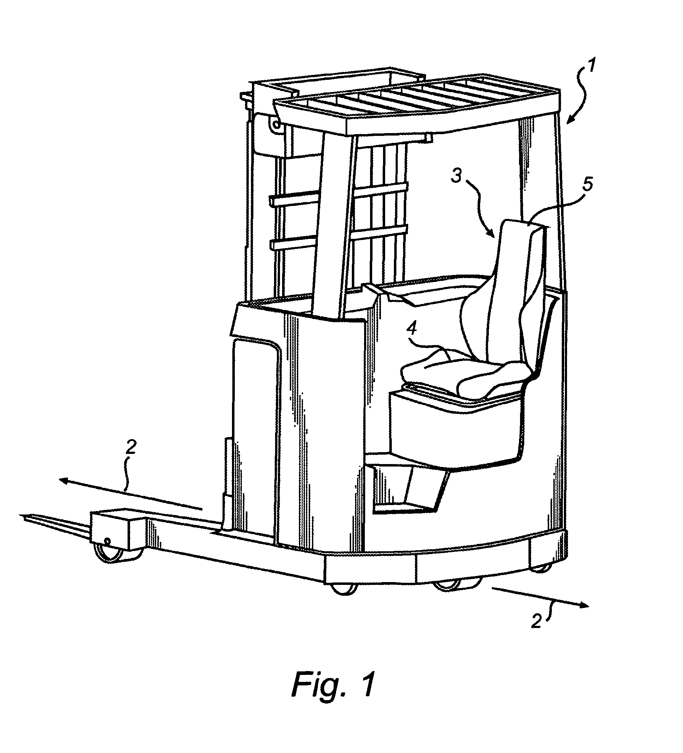

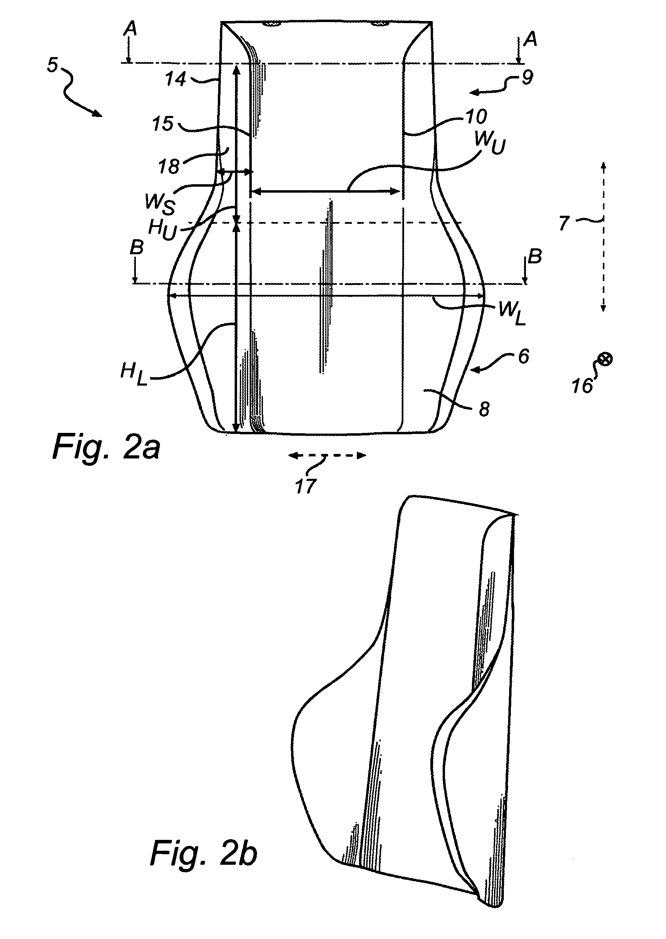

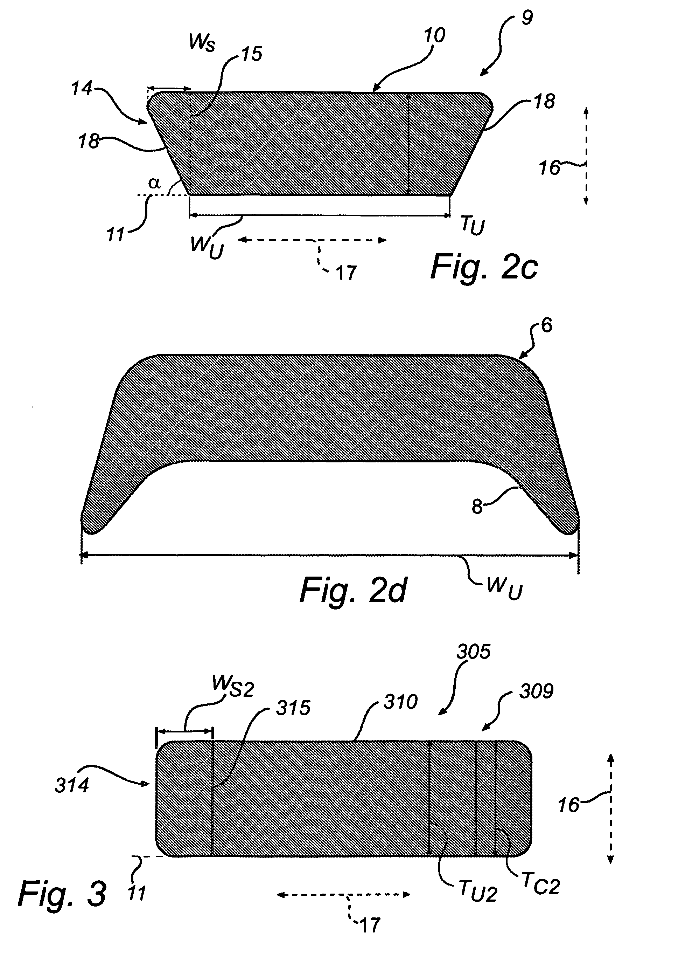

Fig. 1 illustrates an overview of an exemplifying industrial vehicle 1 in accordance with a first embodiment of the present invention. The industrial vehicle 1, here a forklift truck, is adapted such that a user operating the vehicle 1 is seated transversely to a driving direction 2. For seating, a driver's seat 3 is provided comprising an essentially horizontal seat section 4 for supporting the seated user's buttocks, along with a backrest 5 for supporting the seated user's vertebral column. The horizontal seat section 4 and the backrest 5 may be two separate sections, even slightly separated from each other, or if considered appropriate for the implementation at hand, integrated with each other. The backrest 5 will now be described in further detail with reference to Fig. 2.

Fig. 2a is a front view of the backrest 5 of Fig. 1. The backrest 5 comprises a lower section 6 having an extension H_{L} in a longitudinal direction 7, which extension H_{L} is selected to be suitable for support of the user's lumbar and/or pelvic region. The extension H_{L} of the lower section 6 may for instance be 25 to 55 cm, and preferably 35 to 45 cm, although extensions H_{L} beyond the suggested intervals likewise are within the scope. Here, the extension H_{L} of the lower section 6 is approximately 38 cm. Furthermore, the lower section 6 is here adapted such that an inwardly concave surface 8 embraces the seated user's lumbar and/or pelvic region. According to the shown illustration, the concave surface 8 is provided along the entire extension H_{L} on both sides of a center of the lower section 6; note however, that according to alternative embodiments the concave surface 8 may be provided only partly along the extension H_{L} of the lower section 6, or even only on for instance one side, or not at all. The inwardly concave surface 8 is best seen in Fig. 2d, which illustrates a cross section along line B-B of the lower section 6 of Fig. 2a.

The backrest 5 furthermore comprises an upper section 9 for support of the seated user's thoracic region. The upper section 9 comprises an upper center portion 10, with an extension H_{U} in the longitudinal direction 7. The extension H_{U} of the upper center portion 10 is selected to be suitable for support of the user's thoracic region, and may for instance be 5 to 35 cm, and preferably 15 to 25 cm, although extensions H_{U} beyond the suggested intervals likewise are within the scope. Here, the extension H_{U} of the upper center portion 10 is approximately 19 cm. For comfort, the upper center portion 10 and/or the lower section 6 preferably, although not necessarily, comprises a resilient padding.

The upper center portion 10 is essentially flat in a supporting plane 11. The supporting plane 11, which is intended to represent a plane facing the seated user, is best seen in Fig. 2c, which illustrates a cross section along line A-A of the upper section 9 of Fig. 2a. Moreover, the upper center portion 10 has a width W_{U} along the longitudinal direction 7, the width W_{U} being in the range of 10 to 25 cm, and preferably 17 to 22 cm. Here, the width W_{U} of the upper center portion 10 is approximately 20-21 cm, and is essentially constant along the longitudinal direction 7, although a constant width W_{U} may not be a necessity for alternative embodiments. With the width W_{U} of the upper center portion 10 being relatively narrow in comparison to the user's back, the lower section 6 at least partly has a width W_{L} along the longitudinal direction 7 being greater than the width W_{U} of the upper center portion 10. The width W_{L} of the lower section 6 may for instance be 30 to 60 cm, and preferably 40 to 50 cm, although widths W_{L} beyond the suggested intervals likewise are within the scope. Here, the width W_{L} of the lower section 6 is approximately 45 cm.

The upper section 9 furthermore comprises upper side portions 14, provided at least partly along outer edges 15 of the upper center portion 10 in the longitudinal direction 7. Here, and as best seen in Fig. 2c, the outer edges 15 of the upper center portion 10 are essentially straight in a transversal direction 16, i.e. backwards from the seated user and hence the supporting plane 11; note, however, that according to alternative embodiments, the outer edges 15 may take on other feasible shapes to suit the implementation at hand. Furthermore, the upper side portions 14 are here provided on both sides along the entire extension H_{U} of the outer edges 15, although according to alternative embodiments this is not necessarily the case; alternatively a side portion 14 may be provided only partly along the extension H_{U} of an outer edge 15, and even only on one side of the upper center portion 10.

The upper side portions 14 extend at least partly beyond the outer edges 15 in a lateral direction 17, i.e. in a direction substantially perpendicular to the longitudinal direction 7. The upper side portions 14 may be selected to suit different implementations, and the length of an extension W_{S} of the upper side portions 14 may hence vary. The upper side portions 14 may for instance at least partly extend 1 to 9 cm, and preferably 3 to 7 cm, beyond the outer edges 14 in the lateral direction 17. Here, the extension W_{S} of the upper side portions 14 is approximately 4-5 cm.

The total width of the upper section is preferably in the range 15-30 cm.

Furthermore, the upper side portions 14 are adapted to allow freedom of movement of the user's scapulae around the upper center portion 10, whereby the upper side portions 14 not necessarily provide support to the seated user's back when he is facing straight forward, but are rather specifically adapted to provide support for the user's back when he is turned to either side. The upper section 9 with its upper center portion 10 in combination with the upper side portions 14 hence enables for moveability and stability for the seated user in combination with easy rotation from side to side, where support to the user's thoracic region is provided even when he or she is in a rotated position. According to this first embodiment illustrated in Fig. 2, adaptation of the upper side portions 14 to allow freedom of movement of the user's scapulae around the upper center portion 10, is enabled in that supporting surfaces 18 of the upper side portions 14 are outwardly inclined from the supporting plane 11 forming an angle α therewith. The supporting surface 18 is hence extending away from the seated user at an inclined backward angle α. Accordingly, open space is offered to enable movement of the upper torso, arms and shoulder blades of the seated user when rotating from side to side. Although the angle α between the supporting plane 11 and the supporting surface 18 may be arbitrarily selected, it is however favorable with the angle α being in the range of 30 to 60 degrees, and preferably 40 to 50 degrees. Here, the angle α is 45 degrees.

The upper side portions 14 and the upper center portion 10 may be separate sections, and moreover, the upper side portions 14 may be arranged a slight distance from the outer edges 15. Additionally, the upper side portions 14 may be more resilient than the upper center portion 10. Here, however, the upper side portions 14 are integrated with the upper center portion 10, and the upper side portions 14 are extensions of the upper center portion 10 with chamfered or beveled edges representing the supporting surfaces 18. The supporting surface 18 is here, as best seen in Fig. 2c, illustrated as being a straight line. According to alternative embodiments, however, it may rather be preferred to adapt the supporting surface 18 to be somewhat slightly curved, for instance convex or concave, in order to offer the seated user increased comfort while the user is moving his or hers scapulae around the upper center portion 10. Should that be the case, an average value may be utilized to define the angle α, which average value is the angle α between the supporting plane 11 and a straight line imagined from where the supporting surface 18 meets the supporting plane 11 to an end of the supporting surface 18 in the transversal direction 16. Additionally, although the supporting surface 18 here extends slightly backwards for an entire thickness T_{U} of the upper center portion 10, alternatively, the supporting surface 18 may extend for instance only half way across, with the upper side portions 14 for the remaining distance taking on arbitrary shapes with surfaces not being in immediate contact with the seated user. Furthermore, although the upper side portions 14 here has a maximum extension in the transversal direction 16 coinciding with the thickness T_{U} of the upper center portion 10, according to alternative embodiments this is not necessarily the case; the upper side portions 14 may alternatively be of smaller or even greater transversal extension, and the transversal extension may vary irregularly along the lateral direction 17. The thickness T_{U} of the upper center portion 10 may for instance be 2 to 11 cm, and preferably 4 to 9 cm, although thicknesses T_{U} beyond the suggested intervals likewise are within the scope. Here, the thickness T_{U} of the upper center portion 10 is approximately 6-7 cm.

Fig. 3 shows a cross section of an upper section 309 of a backrest 305 according to a second embodiment not forming part of the present invention. As the backrest 305 of the second embodiment to great extent resembles the backrest 5 of the first embodiment, only differences distinguishing this second embodiment from the first will be described in the following.

Here, upper side portions 314, which are provided at least partly along outer edges 315 of an upper center portion 310 in the longitudinal direction 7 and at least partly extending beyond the outer edges 315 in the lateral direction 17, are likewise adapted to allow freedom of movement of the user's scapulae around the upper center portion 310. The upper side portions 314 of Fig. 3, however, comprise a deformable resilient material, whereby the freedom of movement of the user's scapulae around the upper center portion 310 is accomplished by means of the deformability characteristic of the material, rather than, or in addition to, by means of outwardly inclined supporting surfaces 18 shown in Fig. 2c. Being of a deformable material, the upper side portions 314 are adapted to give way as the seated user twists the upper part of his body placing pressure from e.g. the shoulder blade thereon. Thereby, according to this second embodiment, the upper side portions 314 need not necessarily to be e.g. outwardly inclined in order to allow the seated user to freely rotate around the upper center portion 310, but may rather take on arbitrary shapes selected based on other criteria, such as e.g. design.

Here, the upper side portions 314 are extensions of the upper center portion 310 in the lateral direction 17, with the upper side portions 314 having a width W_{S2} of 4-5 cm and a substantially constant thickness T_{C2} in the transversal direction 16 along the lateral direction 17. The thickness T_{C2} of the upper side portions 314 coincides with the thickness T_{U2} of the upper center portion 310, and is here 6-7 cm. Naturally, according to alternative embodiments, the upper side portions 314 may be of irregular thickness T_{C2} along the lateral direction 17, smaller or greater than the thickness T_{U2} of the center portion 310, and even extending beyond the supporting plane 11 in the transversal direction 16 toward the seated user.

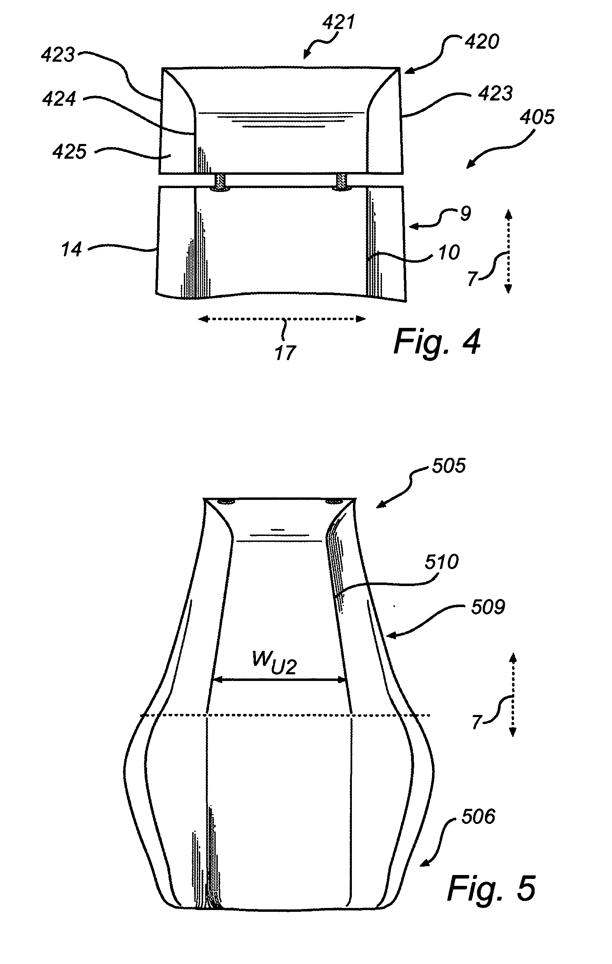

Fig. 4 illustrates a front view of an upper part of a backrest 405 according to a third embodiment of the present invention. As the backrest 405 of the third embodiment to great extent resembles the backrest 5 of the first embodiment, only differences distinguishing this third embodiment from the first will be described in the following.

The backrest 405 of the third embodiment additionally comprises a headrest 420 for support of the user's cervical region. The headrest 420 and the upper section 9 may be two separate sections, even as shown slightly separated from each other, or if considered appropriate for the implementation at hand, integrated with each other.

The headrest 420 comprises a head center portion 421 and head side portions 423 provided at least partly along outer edges 424 of the head center portion 421 in the longitudinal direction 7. The head side portions 423 extend at least partly beyond the outer edges 424 of the head center portion 421 in the lateral direction 17. Furthermore, the head side portions 423 are preferably of similar structure as the upper side portions 14 of the upper center portion 10. In Fig. 4, head supporting surfaces 425 of the head side portions 423 are hence outwardly inclined from the supporting plane 11 (shown in Fig. 2c) forming an angle therewith. According to this third embodiment, the angle between the supporting plane 11 and the outwardly inclined head supporting surface 425 is essentially equal to the angle α between the supporting plane 11 and the outwardly inclined supporting surface 18 of the upper side portion 14, and is hence 45 degrees. In fact, here essentially all characteristics of the head side portions 423 resemble those of the upper side portion 14, even choice of material. Note, however, that according to alternative embodiments, one or several features such as e.g. angle and extension of the head supporting surface 424, or choice of material of the head side portions 423, may differ from the corresponding characteristics of the upper side portions 14.

Fig. 5 illustrates in front view an exemplifying backrest 505 according to a fourth embodiment of the present invention. As the backrest 505 of the fourth embodiment to great extent resembles the backrest 5 of the first embodiment, only differences distinguishing this fourth embodiment from the first will be described in the following.

The backrest 505 of the fourth embodiment comprises an upper center portion 510 having a width W_{U2} along the longitudinal direction 7. However, rather than a width being essentially equal along the longitudinal direction 7, the width W_{U2} of the upper center portion 510 is here essentially gradually tapered in an upward direction of the backrest 505. The width W_{U2} may for instance be 25 cm in a segment of the upper center portion 510 close to the lower section 506 while being 10 cm in a segment of the upper center portion 510 close to the seated users cervical region (neck). Notably, according to alternative embodiments, the width W_{U2} need not necessarily taper gradually in the upward direction of the backrest 510, but the upper center portion 510 may for instance be comprised of a plurality of segments of varying widths.

In a series of practical experiments, various shapes and dimensions of the upper section have been used as a module in combination with other modules to form a backrest and seat. In these experiments, only the upper section module was exchanged, whereas the remainder of the backrest and seat were the same for all the experiments. The backrests were tested by a number of test persons, and evaluated based on comfort level in both forward looking and side-looking position, easiness to switch between these positions, and overall ergonomic experience.

In these experiments, it was surprisingly found that the highest ratings were obtained for the backrests having an upper section allowing the scapulae to be moved backwards at a minimum 1 cm and at a maximum 7 cm, i.e. moved in a direction away from the supporting surface of the center portion and in a direction away from the user. Further, the best results were obtained when a moveability of at a minimum 2 cm and at a maximum 4 cm were used. The parts of the upper section were the scapulae were contacting the upper section, and where the moveability of the scapula was determined, varied between the test persons, due to various body sizes, but it was found that these parts of the upper side portions generally were located at a distance from a centre longitudinal line of the backrest falling within the range 7.5-15 cm.

The present inventive concept has been described by way of example, and the person skilled in the art realizes that the present invention by no means is limited to the preferred embodiments described above. For instance, a backrest with upper side portions of deformable resilient material may naturally be provided with a headrest, and furthermore, the headrest may comprise head side portions being of deformable resilient material.

It may also be noted that, for the sake of clarity, the dimensions of certain components illustrated in the drawings may differ from the corresponding dimensions in real-life implementations of the invention, for instance the dimensions of the lower and upper sections, the upper center portion, the upper side portions and the headrest.

## Claims

1. A backrest (5) for an industrial vehicle (1) where a user is seated transversely to a driving direction (2) for supporting the seated user's vertebral column, said backrest (5) comprising:
an upper section (9) for support of said user's thoracic region, said upper section (9) comprising an upper center portion (10) being essentially flat in a supporting plane (11), and upper side portions provided at least partly along outer edges (15) of said upper center portion (10) in a longitudinal direction and at least partly extending beyond said outer edges (15) in a lateral direction (17); and
a lower section (6) for support of said user's lumbar and/or pelvic region, said lower section (6) at least partly having an inwardly concave surface (8) for embracing the user's lumbar and/or pelvic region,
**characterized in that** said upper side portions (14) have supporting planes being outwardly inclined from said supporting plane of the upper center portion in a direction away from the user, whereby the supporting surfaces (18) of said upper side portions extend away from the seated user rather than towards the user, e.g. extending slightly backwards in a transversal direction from the supporting plane, the shape of the upper side portions thereby being adapted to allow freedom of movement of the user's scapulae around said upper center portion (10).

2. The backrest (5) according to claim 1, wherein the parts of the upper side portions allowing said moveability of the scapula are arranged at a distance from a centre longitudinal line of the backrest falling within the range 7.5-15 cm.

3. The backrest (5) according to claim 1 or 2, wherein a width (W_{U}) of the upper center portion is essentially constant along said longitudinal direction (7).

4. The backrest (505) according to claim 1 or 2, wherein a width (W_{U2}) of the upper center portion is essentially gradually tapered along said longitudinal direction (7) in an upward direction of the backrest (505).

5. The backrest (5) according to any one of the preceding claims, wherein the average total width of the upper portion is within the range 15-30 cm.

6. The backrest (5) according to any one of the preceding claims, wherein the supporting surfaces (18) of said upper side portions (14) are outwardly inclined from said supporting plane (11) of the upper center portion forming an angle (α) therewith.

7. The backrest (5) according to claim 6, wherein an average value of said angle (α) is in the range of 30 to 60 degrees, and preferably 40 to 50 degrees.

8. The backrest (5) according to any one of the preceding claims, wherein said upper side portions (14) comprise a deformable resilient material.

9. The backrest (5) according to any one of the preceding claims, wherein said upper side portions (14) at least partly extend 1 to 9 cm, and preferably 3 to 7 cm, beyond said outer edges (15) in said lateral direction (17).

10. The backrest (5) according to any one of the preceding claims, wherein said upper side portions (14) are more resilient than said upper center portion (10).

11. The backrest (5) according to any one of the preceding claims, wherein said upper center portion (10) extends 5 to 35 cm, and preferably 15 to 25 cm, in said longitudinal direction (7).

12. The backrest (5) according to any one of the preceding claims, wherein said lower section (6) extends 25 to 55 cm, and preferably 35 to 45 cm, in said longitudinal direction (7).

13. The backrest (5) according to any one of the preceding claims, wherein said upper center portion (10) and/or said lower section (6) comprises a resilient padding.

14. The backrest (405) according to any one of the preceding claims, wherein said backrest (405) further comprises a headrest (420) for support of said user's cervical region, said headrest (420) comprising:
a head center portion (421); and
head side portions (423) provided at least partly along outer edges (424) of said head center portion (421) in said longitudinal direction (7) and at least partly extending beyond the outer edges (424) of said head center portion (421) in a lateral direction (17), said head side portions (423) being of similar structure as said upper side portions (14).

15. An industrial vehicle driver's seat (3) comprising:
an essentially horizontal seat section (4) for supporting a seated user's buttocks; and
a backrest (5) according to any one of claims 1-14.

16. An industrial vehicle (1), and preferably an industrial truck, comprising an industrial vehicle driver's seat (3) according to claim 15.

## Patentansprüche

1. Rückenlehne (5) für ein Industriefahrzeug (1), in dem ein Nutzer quer zu einer Fahrtrichtung (2) sitzt, zum Abstützen der Wirbelsäule des sitzenden Benutzers, wobei die Rückenlehne (5) Folgendes umfasst:
einen oberen Abschnitt (9) zum Abstützen des Brustbereichs des Benutzers, wobei der obere Abschnitt (9) einen oberen Mittelabschnitt (10) umfasst, der in einer Stützebene (11) im Wesentlichen flach ist, und obere Seitenabschnitte, die zumindest teilweise entlang von Außenrändern (15) des oberen Mittelabschnitts (10) in einer Längsrichtung bereitgestellt sind und sich in einer Seitenrichtung (17) zumindest teilweise über die Außenränder (15) hinaus erstrecken, und
einen unteren Abschnitt (6) zum Abstützen des Lenden- und/oder Beckenbereichs des Benutzers, wobei der untere Abschnitt (6) zumindest teilweise eine einwärts konkave Oberfläche (8) zum Umfangen des Lenden- und/oder Beckenbereichs des Benutzers aufweist,
**dadurch gekennzeichnet, dass** die oberen Seitenabschnitte (14) Stützebenen aufweisen, die in eine vom Benutzer weg führende Richtung von der Stützebene des oberen Mittelabschnittes aus nach außen geneigt sind, wodurch sich die Stützflächen (18) der oberen Seitenabschnitte vom sitzenden Benutzer weg erstrecken statt zum Benutzer hin, sich z. B. in einer Querrichtung von der Stützebene aus leicht nach hinten erstrecken, wodurch die Form der oberen Seitenabschnitte derart angepasst ist, dass um den oberen Mittelabschnitt (10) herum eine Bewegungsfreiheit der Schulterblätter des Benutzers ermöglicht wird.

2. Rückenlehne (5) nach Anspruch 1, wobei die Teile der oberen Seitenabschnitte, welche die Bewegungsfreiheit der Schulterblätter ermöglichen, in einem Abstand zur mittleren Längslinie der Rückenlehne angeordnet sind, der im Bereich von 7,5 bis 15 cm liegt.

3. Rückenlehne (5) nach Anspruch 1 oder 2, wobei eine Breite (W_{U}) des oberen Mittelabschnitts in der Längsrichtung (7) im Wesentlichen gleichbleibend ist.

4. Rückenlehne (505) nach Anspruch 1 oder 2, wobei sich eine Breite (W_{U2}) des oberen Mittelabschnitts in der Längsrichtung (7) in eine Aufwärtsrichtung der Rückenlehne (505) im Wesentlichen schrittweise verjüngt.

5. Rückenlehne (5) nach einem der vorhergehenden Ansprüche, wobei die durchschnittliche Gesamtbreite des oberen Abschnitts im Bereich von 15 bis 30 cm liegt.

6. Rückenlehne (5) nach einem der vorhergehenden Ansprüche, wobei die Stützflächen (18) der oberen Seitenabschnitte (14) von der Stützebene (11) des oberen Mittelabschnitts aus nach außen geneigt sind und einen Winkel (α) dazu bilden.

7. Rückenlehne (5) nach Anspruch 6, wobei ein durchschnittlicher Wert des Winkels (α) im Bereich von 30 bis 60 Grad liegt und vorzugsweise von 40 bis 50 Grad.

8. Rückenlehne (5) nach einem der vorhergehenden Ansprüche, wobei die oberen Seitenabschnitte (14) ein verformbares, elastisches Material umfassen.

9. Rückenlehne (5) nach einem der vorhergehenden Ansprüche, wobei sich die oberen Seitenabschnitte (14) in der Seitenrichtung (17) zumindest teilweise 1 bis 9 cm weit und vorzugsweise 3 bis 7 cm weit über die Außenränder (15) hinaus erstrecken.

10. Rückenlehne (5) nach einem der vorhergehenden Ansprüche, wobei die oberen Seitenabschnitte (14) elastischer sind als der obere Mittelabschnitt (10)

11. Rückenlehne (5) nach einem der vorhergehenden Ansprüche, wobei sich der obere Mittelabschnitt (10) 5 bis 35 cm und vorzugsweise 15 bis 25 cm in der Längsrichtung (7) erstreckt.

12. Rückenlehne (5) nach einem der vorhergehenden Ansprüche, wobei sich der untere Abschnitt (6) 25 bis 55 cm und vorzugsweise 35 bis 45 cm in der Längsrichtung (7) erstreckt.

13. Rückenlehne (5) nach einem der vorhergehenden Ansprüche, wobei der obere Mittelabschnitt (10) und/oder der untere Abschnitt (6) eine elastische Polsterung umfassen.

14. Rückenlehne (405) nach einem der vorhergehenden Ansprüche, wobei die Rückenlehne (405) ferner eine Kopfstütze (420) zum Abstützen des Halswirbelbereichs des Benutzers umfasst, wobei die Kopfstütze (420) Folgendes umfasst:
einen Kopfmittelabschnitt (421) und
Kopfseitenabschnitte (423), die zumindest teilweise entlang von Außenrändern (424) des Kopfmittelabschnitts (421) in der Längsrichtung (7) bereitgestellt sind und sich in eine Seitenrichtung (17) zumindest teilweise über die Außenränder (424) des Kopfmittelabschnittes (421) hinaus erstrecken, wobei die Kopfseitenabschnitte (423) von ähnlicher Struktur wie die oberen Seitenabschnitte (14) sind.

15. Industriefahrzeug-Fahrersitz (3), Folgendes umfassend:
einen im Wesentlichen horizontalen Sitzabschnitt (4) zum Stützen des Gesäßes eines sitzenden Benutzers und
eine Rückenlehne (5) nach einem der Ansprüche 1 bis 14.

16. Industriefahrzeug (1) und vorzugsweise ein Flurförderzeug, einen Industriefahrzeug-Fahrersitz (3) nach Anspruch 15 umfassend.

## Revendications

1. Dossier (5) pour un véhicule industriel (1) pour lequel un utilisateur est assis transversalement à une direction de conduite (2) pour supporter la colonne vertébrale de l'utilisateur assis, ledit dossier (5) comprenant
une section supérieure (9) pour soutenir ladite région thoracique de l'utilisateur, ladite section supérieure (9) comprenant une portion centrale supérieure (10) étant pour l'essentiel plate dans un plan de soutien (11) et des portions latérales supérieures mises en place au moins en partie le long des bords extérieurs (15) de ladite portion centrale supérieure (10) dans une direction longitudinale et au moins en partie s'étendant au-delà desdits bords extérieurs (15) dans une direction latérale (17), et
une section inférieure (6) pour soutenir ladite région lombaire et/ou pelvienne de l'utilisateur, ladite section inférieure (6) ayant au moins en partie une surface intérieurement concave (8) pour contenir la région lombaire et/ou pelvienne de l'utilisateur,
**caractérisé en ce que** lesdites portions latérales supérieures (14) ont des plans de soutien inclinés extérieurement depuis ledit plan de soutien de la portion centrale supérieure dans une direction éloignée de l'utilisateur, les surfaces de soutien (18) desdites portions latérales supérieures s'étendant loin de l'utilisateur assis plutôt que vers l'utilisateur, par ex.: s'étendant légèrement en arrière dans une direction transversale depuis le plan de soutien, la forme des portions latérales supérieures étant à cet effet adaptée pour permettre une liberté de mouvement de l'omoplate de l'utilisateur autour de ladite portion centrale supérieure (10).

2. Dossier (5) selon la revendication 1 pour lequel les parties des portions latérales supérieures permettant une dite mobilité de l'omoplate sont disposées à une distance d'une ligne longitudinale centrale du dossier se situant dans la gamme de 7,5 - 15 cm.

3. Dossier (5) selon la revendication 1 ou 2 pour lequel une largeur (Wᵤ) de la portion centrale supérieure est pour l'essentiel constante le long de ladite direction longitudinale (7).

4. Dossier (505) selon la revendication 1 ou 2 pour lequel une largeur (Wᵤ₂) de la portion centrale supérieure est pour l'essentiel progressivement conique le long de ladite direction longitudinale (7) dans une direction ascendante du dossier (505).

5. Dossier (5) selon une quelconque des revendications précédentes pour lequel la largeur totale moyenne de la portion supérieure se situe dans une gamme de 15-30 cm.

6. Dossier (5) selon une quelconque des revendications précédentes pour lequel les surfaces de soutien (18) desdites portions latérales supérieures (14) sont inclinées extérieurement depuis ledit plan de soutien (11) de la portion centrale supérieure formant avec cela un angle (α).

7. Dossier (5) selon la revendication 6 pour lequel une valeur moyenne dudit angle (α) se situe dans la gamme de 30 à 60 degrés et de préférence de 40 à 50 degrés.

8. Dossier (5) selon une quelconque des revendications précédentes pour lequel lesdites portions latérales supérieures (14) comprennent un matériau résilient déformable.

9. Dossier (5) selon une quelconque des revendications précédentes pour lequel lesdites portions latérales supérieures (14) s'étendent au moins en partie de 1 à 9 cm et de préférence de 3 à 7 cm, au-delà desdits bords extérieurs (15) dans ladite direction latérale (17).

10. Dossier (5) selon une quelconque des revendications précédentes pour lequel lesdites portions latérales supérieures (14) sont plus résilientes que ladite portion centrale supérieure (10).

11. Dossier (5) selon une quelconque des revendications précédentes pour lequel ladite portion centrale supérieure (10) s'étend de 5 à 35 cm et de préférence de 15 à 25 cm dans ladite direction longitudinale (7).

12. Dossier (5) selon une quelconque des revendications précédentes pour lequel ladite section centrale supérieure (10) et/ou ladite section inférieure (6) s'étend de 25 à 55 cm et de préférence de 35 à 45 cm dans ladite direction longitudinale (7).

13. Dossier (5) selon une quelconque des revendications précédentes pour lequel ladite portion centrale supérieure (10) et/ou ladite section inférieure (6) comprend un rembourrage résilient.

14. Dossier (405) selon une quelconque des revendications précédentes pour lequel ledit dossier (405) comprend en plus un appui-tête (420) pour soutenir ladite région cervicale de l'utilisateur, ledit appui-tête (420) comprenant :
une portion centrale de tête (421), et
des portions latérales de tête (423) mises en place au moins en partie le long des bords extérieurs (424) de ladite portion centrale de tête (421) dans ladite direction longitudinale (7) et s'étendant au moins en partie au-delà des bords extérieurs (424) de ladite portion centrale de tête (421) dans une direction latérale (17), lesdites portions latérales de tête (423) étant de structure analogue auxdites portions latérales supérieures (14).

15. Siège de conducteur d'un véhicule industriel (3) comprenant :
une section de siège essentiellement horizontale (4) pour supporter les fesses de l'utilisateur assis, et
un dossier (5) selon une quelconque des revendications 1-14.

16. Véhicule industriel (1) et de préférence un chariot industriel comprenant un siège de conducteur de véhicule industriel (3) selon la revendication 15.
